# EUROPEAN PATENT APPLICATION

(11) **EP 4 647 160 A1**
(43) Date of publication of application: **12.11.2025**
(21) Application number: 24179610.1
(22) Date of filing: 03.06.2024
(51) Int. Cl.: B01J 13/00

(54) **MICROPOROUS COMPOSITE INSULATION COMPOSITION AND USE THEREOF**

(30) Priority: 08.05.2024 US 202463644049 P
(71) Applicant: PRTC NV, 2830 Tisselt (BE)
(72) Inventor: ABDUL-KADER, Oras, 9100 Sint Niklaas (BE); MARECHAL, David, 84170 Monteux (FR); GREGG, William, Maryville, 37801 (US)
(74) Representative: Etex Services NV - Etex IPSC

(57) **Abstract**

The processable microporous insulation material is prepared by providing a hydrogel or a precursor thereof; generating an aqueous siliceous composition based on waterglass; mixing the aqueous siliceous composition with the hydrogel or the precursor thereof to obtain a gel; loading a microporous powder into the gel, said microporous powder comprising opacifier and particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic. The processable microporous insulation material can be processed to provide insulation to an object.

## Description

### FIELD OF THE INVENTION

The invention relates to a microporous composite insulation material comprising a gelled material in which a microporous powder is loaded, which microporous powder comprises fiber, an opacifier and pyrogenic silica, wherein said pyrogenic silica is hydrophobic.

The invention further relates to the use of said microporous composite insulation material for generating a molded body of predefined shape and for applying insulation on a surface.

### BACKGROUND OF THE INVENTION

Such a microporous composite insulation material is known from US5703147. The said material comprises a combination of 7 ingredients of which 2 are optional. These ingredients are inorganic reinforcement fiber (a), inorganic binder (b), hydrophilic fumed particulate filler (c), fumed particulate insulation material that is rendered hydrophobic (d), polymer (e), setting agent (f) and opacifier (g), the letter being optional.

As specified in the paragraph bridging columns 3 and 4, the polymer (e) and part of the hydrophilic fumed particulate filler (c) are first mixed. This mixture is then added to the inorganic binder, diluted with water, further mixed and combined with the setting agent, so as to gel the inorganic binder. As is explained in column 3 of US5703147, the setting agent for setting the binder may be organic such as starch. However, it is preferably a base stabilized colloidal silica that is used in combination with an acid stabilized colloidal silica as the binder. For this binder, a polymer of ethylene oxide is the polymer of choice, although cellulose ethers and copolymers of vinyl amides and acrylic acids could be used alternatively. Finally, the ingredients (a), (d) and (g) and part of (c) are mixed into a dry mixture. This mixture is a microporous powder that is added to the gelled inorganic binder. The microporous powder comprises hydrophobic fumed silica, an opacifier, inorganic fiber and hydrophilic fumed silica. The amount of inorganic fiber in the insulation material preferably 18wt%, implying a content of about 27wt% as part of the microporous powder.

Acid stabilized colloidal silica is commercially available and known per se from US3007878. It is prepared from NaOH-stabilized colloidal silica particles (also known as silica sols) by cation removal using a cation exchange resin. The resulting silica sols are acidic, with silanol (SiOH) groups at the surface and a pH of 2-4. Furthermore, the acidic sol may be cation-coated by treatment with aluminum chloride and heating. may be added to such an acidic sol.

Acid stabilized colloidal silica is a bit of a specialty, as compared to base-stabilized colloidal silica. The reason for using this version as a binder seems to reside therein that the polyethylene oxide and the hydrophilic fumed silica are acidic as well. Apparently, the use of base-stabilized colloidal silica with the polyethylene oxide and hydrophilic fumed silica did not lead to a desired result.

Moreover, the density of the resulting insulation materials is quite low. US5703147 mentions a density that is preferably between 10 and 16 pcf. This corresponds to 160 to 256 g/dm³. Microporous materials with low density have a disadvantage of low mechanical strength. In US5703147, this is solved in that the microporous powder comprises inorganic fiber in large amounts. This does not appear beneficial for thermal conductivity. Moreover, both the use of acid-stabilized colloidal silica and large amounts of inorganic fiber adds to cost, especially because the fiber includes a special alkaline earth silicate fiber known as Superwool^{™} 607, which is a wool and very small diameter (typically 2-3 micron).

### SUMMARY OF THE INVENTION

It is therefore an object of the invention to provide an improved preparation method of a processable microporous insulation composition, which does not have the disadvantages of the prior art as specified and results in an insulation with adequate thermal conductivity.

It is a further object to provide the resulting processable microporous insulation composition.

It is again a further object to use the resulting processable microporous insulation composition for the application of insulation on an object.

According to a first aspect, the invention provides a method of preparing a processable microporous insulation material, which comprises a microporous powder in a gel. The microporous powder comprises opacifier and particulate silica material from the group of pyrogenic silica and precipitated silica, said particulate silica material optionally further comprising alumina, wherein said microporous powder and/or at least part of said particulate silica material is hydrophobic. The method comprises the steps of:
- providing a hydrogel or a precursor thereof;
- generating an aqueous siliceous composition based on waterglass;
- mixing the aqueous siliceous composition with the hydrogel or the precursor thereof to obtain a gel;
- loading a microporous powder into the gel.

According to a second aspect, the invention provides a processable microporous insulation material comprising a microporous powder loaded into a gel, which is obtainable with the method of the invention. The microporous powder comprises opacifier and particulate silica material from the group of pyrogenic silica and precipitated silica, said particulate silica material optionally further comprising alumina, wherein said microporous powder and/or at least part of said particulate silica material is hydrophobic. The gel comprises a hydrogel obtained by crosslinking a hydrophilic polymer as well as silica material obtained from by bringing waterglass to a lower pH.

According to a further aspect, the invention provides a method of applying microporous insulation to an object, wherein the processable microporous insulation material of the invention is used as the microporous insulation.

According to again a further aspect, the invention provides an object provided with a composite microporous insulation, that comprises a microporous powder loaded into a gel,
wherein said microporous powder comprising at least a particulate silica material and an opacifier, said particulate silica material being chosen from the group of pyrogenic silica and precipitated silica, said particulate silica material optionally further comprising alumina, wherein said microporous powder and/or at least part of said particulate silica material is hydrophobic,
wherein said gel comprises a polymer-based hydrogel and a silica gel material obtained by dilution and pH lowering of waterglass, followed by drying of the gel after loading of the microporous powder.

The invention provides a method in which the gelation does not occur by destabilization of acid-stabilized colloidal silica, but rather by formation of a hydrogel and destabilization of waterglass. It is textbook knowledge that waterglass is stable at very alkaline pH, such as pH11-13, and based on the presence of negatively charged oxide-ions, balanced by alkaline earth cations. At lower pH, the negative charge diminishes, resulting in formation of an aqueous siliceous composition comprising silica species of varying nature, i.e. monomeric, oligomeric and possibly polymeric. These species will be dispersed into the hydrogel. While the exact mechanism is unknown, it was found in experimental work that the microporous powder may be loaded more easily into the hydrogel when adding waterglass to the hydrogel, regardless of whether colloidal silica was added into the hydrogel.

A hydrogel is generally known as a group of polymer materials, the hydrophilic structure of which renders them capable of holding significant water in the three-dimensional network of the hydrogel. The hydrogel may be synthesized by means of one-step procedures including polymerization and parallel crosslinking of multifunctional monomers. Alternatively, the hydrogel may be synthesized by means of multistep procedures comprising the synthesis of polymer molecules having reactive groups and subsequent crosslinking. Such multistep procedure may further be achieved in that a crosslinking agent is added to react with such reactive groups. The polymer molecules are herein hydrophilic. It appears that the multistep procedure is preferred. Good results have been obtained by a method comprising the steps of providing a dry mixture of a hydrophilic polymer, a crosslinking polymeric or oligomeric material, and bringing said dry mixture into contact with water or an aqueous composition so as to crosslink the hydrophilic polymer with the crosslinking polymeric or oligomeric material.

Hydrogels may be prepared from natural materials. Known examples include starch, cellulose materials and derivatives thereof such as cellulose ethers, hyarulonic acid, chitosan and the like. Hydrogels may alternatively be prepared from synthetic monomers such as acrylic acid, acrylate, acrylamide and ethylene glycol, and/or from synthetic polymers, such as polyacrylic acid, polyacrylamide copolymers, polyalkylene oxides, for instance by way of crosslinking. Hydrogels obtained by crosslinking of synthetic polymers are deemed preferred for the invention, in view of reproducibility. Furthermore, the density of crosslinking sites may be tuned and optimized. Such crosslinking density is relevant for the performance of the resulting three-dimensional network. In view of desired loading of microporous powder into the hydrogel, such crosslinking density is preferably relatively low, which can be achieved in that the hydrogel is generated from polymeric molecules of sufficient chain size and hence sufficient molecular weight. Polymers with a weight-average molecular mass of 1.10⁶ g/mol or more, such as up to 6.10⁶ g/mol have been found appropriate. Crosslinking agents are preferably polymeric as well. Preferably the polymer molecules have a limited number of crosslinking sites. Combinations of polyacids and alcohols or epoxy groups to form ester-bonds are deemed useful. Combinations of acid groups with amine-groups to form amide-bonds may be used alternatively.

In a preferred embodiment, the hydrophilic polymer is a polyalkylene oxide and the crosslinker is a polyacid material. This implementation is deemed to minimize reactions between reactions between silanol groups formed from waterglass and the acid groups in the polymer, which could render the hydrogel formation less controllable.

In an implementation of said preferred embodiment, the polyalkylene oxide is a polyethylene oxide and/or copolymers thereof. Generally, the polyalkylene oxide can have an alkylene chain of C2-C6, thus being polyethylene oxide, polypropylene oxide, polybutylene oxide, polyisobutylene oxide, polypentylene oxide, polyhexylene oxide and copolymers thereof. Good results have been obtained with polyethylene oxide, which appears to match well to silica. Although homocopolymers are preferred, copolymers are not excluded. For instance, block copolymers of polyalkylene oxide are known per se as suitable for forming hydrogels Preferably, the content of such copolymer is less than 25wt%, more preferably less than 10wt%, or even less than 5wt%. The molecular weight (i.e. weight-average molecular mass) of the polyalkylene oxide can be chosen from a broad range. Preferably, it is more than 1.106 g/mol, such as in the range of 1.5.106 to 7.106 g/mol, for instance 2.0.106-5.106 g/mol. Since crosslinking of polyethylene oxide occurs at the end groups, a higher molecular mass leads to a less dense crosslinking and hence to a more flexible hydrogel.

In an advantageous embodiment, polyacrylic acid is used as a crosslinker. The polyacrylic acid may herein be partially esterified for stabilization and to obtain a sufficient distance between (carboxylic) acid groups along the chain. The polyacrylic acid is suitably used in powder form, for instance as a spray-dried polyacrylic acid. It may be a copolymer of acrylic acid, acrylate and further monomers. Examples of spray-dried acrylic polymers, which are redispersible powders are BASF ACRONAL S430P, BASF ACRONAL S629P, DOW DRYCRYL 2903, ELOTEX FLEX 8300, ELOTEX FLEX 8310, ELOTEX FLEX 8320, ELOTEX FX 7000, ELOTEX TITAN 8100 or a mixture thereof. One way of preparing such redispersible powder is known from WO2008059034, which is included herein by reference. It is herein disclosed to form a polyacrylic acid (or acrylate) in the form of a dispersion, emulsion or microemulsion (low viscous) in the presence of a stabilization colloid. The dispersion is then formulated into a powder by addition of a water-soluble polymer and subsequent drying, such as by spray-drying, freeze-drying, fluidized bed drying, drum drying and/or flash drying. Hence, it is preferred to provide the acrylic polymer as a dispersible powder, and more preferably as a dried (such as spray-dried) formulation of a particulate, acrylic polymer or copolymer (latex) with a water-soluble polymer. Examples of such water-soluble polymers include one or several polyvinyl pyrrolidones and/or polyvinyl acetals with a molecular weight of 2,000 to 400,000, fully or partially saponified and/or modified fully or partially saponified polyvinyl alcohols with a degree of hydrolysis of preferably about 70 to 100 mol. %, in particular of about 80 to 98 mol. %, and a Höppler viscosity in 4% aqueous solution of preferably 1 to 100 mPas, in particular of about 3 to 50 mPas (measured at 20° C. in accordance with DIN 53015), as well as melamine formaldehyde sulfonates, naphthaline formaldehyde sulfonates, block copolymerisates of propylene oxide and ethylene oxide, styrene-maleic acid and/or vinyl ether-maleic acid copolymerisates.

In the context of the invention, the hydrogel may be generated separate from the mixing with the waterglass. It may further be generated immediately prior to the mixing with waterglass, especially by bringing a dry mixture of polymers and crosslinking agents into contact with water or an aqueous composition. The hydrogel may further be generated simultaneously with the mixing with waterglass. Water may be added as a diluent and also to control the pH of the mixture. This mixture pH has an impact on the speed with which the waterglass is converted into silicic acid species and the polycondensation thereof into silica sols and/or gels. The term 'precursor of a hydrogel' is used in the present application to refer to the embodiment, wherein the hydrogel is generated is in situ. The precursor is then essentially the combination of individual polymers that form the hydrogel when added to water.

Preferably, the hydrogel is generated in situ, i.e. by bringing a dry mixture of polymers and crosslinking agents into contact with water and the waterglass, or a 'diluted' waterglass composition. This in situ generation of the hydrogel is deemed to have the advantage that the development of the hydrogel and any colloidal silica or silica gel resulting from the waterglass occur simultaneous, and that interpenetrating networks may be formed, and/or that the aqueous siliceous composition may extend and/or be aligned along the chains of the hydrogel, especially the polyalkylene oxide chains. It is observed herein, that the dilution of water glass with further water may reduce the pH and hence start a transformation of the waterglass into aqueous siliceous composition. However, upon addition of the dry mixture, that is typically acidic, the pH will decrease further and more pronounced, which results therein that the transformation of water glass into aqueous siliceous composition accelerates. Clearly, the transformation rate of the water glass may be tuned by controlling and the changing the pH of the composition. This is deemed particularly useful when adding pre-generated hydrogel, but may also used in combination with the in-situ generation of the hydrogel.

As waterglass, any type of waterglass and any counterions such as sodium, potassium and lithium may be used. Presence of earth alkali cations such as magnesium or calcium is not excluded. The density of the waterglass is preferably at least 20% by weight, or even higher such as 30% by weight or more. This facilitates mixing. Good results have been achieved with potassium silicate water glass. Mixing procedures of the waterglass and the hydrogel can be optimized and may well have an impact on the density of the resulting material.

In one embodiment, the dry weight amount of waterglass is 5-20 wt% based on total dry weight of ingredients to the processable microporous insulation material. In a preferred implementation, this dry amount is in the range of 10 to 18wt%. Good results have been achieved with amounts in the range of 12 to 17wt%, such as 15wt%, using potassium silicate. When using sodium silicate, the corresponding amounts will be somewhat lower. This is preferably combined with a hydrogel in an amount of 1 to 5wt% based on the total weight of ingredients to the processable microporous insulation material. The hydrogel amount may for instance be in the range of 2-3% by weight. The amounts of hydrogel are herein expressed as dry weight of the polymeric ingredients forming the hydrogel. Such a ratio appears to correspond to a molar ratio of silicic acid unit (SIO3) and ethyleneoxide unit (C2H4-O) in the range of 0.8 to 3.0, preferably between 1 and 2.

Preferably, a silica material is provided as a dispersant in the hydrogel upon its formation. More preferably, said silica material is a hydrophilic fumed silica. The dispersant is suitably added in the hydrogel prior to the addition of the waterglass. It cannot be excluded that the silicic acid species from the waterglass would react with said hydrophilic fumed silica. However, there is no indication that this would occur upon addition of the waterglass or before loading of the microporous powder.

According to a further embodiment, the microporous powder is loaded into the gelled material in an amount of 65-85wt%, preferably 70-80wt% based on total dry weight of ingredients to the processable microporous insulation material. It appears that waterglass facilitates a high loading, as compared to colloidal silica. Whereas the waterglass may be converted to silicic acid and its oligomers and polymers entirely or almost entirely, colloidal silica is particulate and the effective silicon content may remain hidden in the particle.

According to the invention, the microporous powder comprises a particulate silica material chosen from pyrogenic silica and precipitated silica, said particulate silica material optionally further comprising alumina. A pure alumina material is not deemed useful or beneficial in the processable microporous insulation material. However, alumina could partially replace the silica. When desiring very good high temperature stability of well above 400oC, pyrogenic silica is preferred. When configured for use up to operation temperatures of around 400oC, precipitated silica may be used. Mixtures of pyrogenic silica and precipitated silica are not excluded. The use of pyrogenic silica is furthermore preferred to obtain minimum thermal conductivity. The amount of particulate silica material is generally in the range of 30-70wt%. It is suitably in the range of 50-65wt% based on the total dry weight of the microporous powder. However, this amount may be reduced by addition of any filler.

According to the invention, at least part of the particulate silica material or the microporous powder is hydrophobic. Preferably, the particulate silica material is rendered hydrophobic. Such may be achieved by treatment of - hydrophilic - particulate silica material with a hydrophobation agent, which is preferably an alkylsilane or (halogen) substituted alkylsilane or siloxane compound. The hydrophobation is preferably performed prior to mixing of the particulate silica material with other ingredients. Hydrophobic pyrogenic silica may also be purchased from suppliers. While in one embodiment all of the particulate silica material is hydrophobic, this is not deemed essential. For instance at least 50% by weight of the particulate silica material may be hydrophobic, preferably at least 70% by weight, more preferably at least 80% by weight. Rather or in addition to the use of hydrophobic particulate silica in the microporous powder, the microporous powder could be hydrophobized as such by treatment with a hydrophobation agent.

Opacifiers for use in microporous powders are known per se, and are for instance silicon carbide, titanium oxide (rutile form), zirconium silicate, magnesium oxide. The use of titanium oxide is deemed preferable in the context of the present invention. The amount of opacifiers is in an advantageous embodiment at least 20wt%, preferably at least 30wt% based on the weight of the microporous powder, and more preferably at least 35wt%, such as 35-50wt%, when using titanium oxide. When using silicon carbide, the amount of opacifier is preferably at least 10wt%, more preferably at least 15wt% or even at least 20wt%.

Fibers are deemed not necessary in the present invention, although the addition of fibers is deemed beneficial to ensure sufficient flexibility of the microporous insulation after application and drying. Inorganic fibers are preferred for sake of high temperature stability, if so desired. Otherwise cellulose fibers may be used. As inorganic fibers, fibers with a diameter of at least 5 µm is preferred. Such fibers are distinct from fibers with a smaller diameter such as 2-3 µm, which are also known as wool. Such smaller diameter fibers, as used in the prior art, will have different distribution and less effect on flexibility but more on reinforcement. While glass fibers are not excluded, the use of silica-based fibers, such as fibers comprising at least 75% SiO2 and at least 5% Al2O3, such as at least 80% SiO2 and 5-20% Al2O3 is preferred. Generally, due to any surface treatment of the fiber material, the particulate silica material and the opacifier typically do not stick to the fiber material. Still, the silica fiber may interact favorably with the hydrophobic particulate silica material during loading and/or drying of the processable material. The amount of fibers is preferably up to 10% by (dry) weight of the microporous powder. Use of at most 5wt% fibers is preferred, as it turns out that an increased amount of fibers results in an increased thermal conductivity and higher degree of shrinkage in a high temperature treatment. In a preferred implementation, the amount of fibers is for instance 1-4 wt%, such as 2-3% by weight of the microporous powder.

Preferably, the density of the processable microporous insulation material is at least 300 g/dm³, preferably in the range of 350-500 g/dm³, or even 350-450 g/dm³. Such a density is understood to provide sufficient mechanical stability and beneficial thermal conductivity at 400°C or higher. The density may be tuned by way of way of the load of the microporous powder in the gelled material, as well as the composition of the microporous powder. Furthermore, the generation of the hydrogel may impact the density; i.e. the larger the volume, the smaller the density. This may be optimized by trial and error if so needed and in dependence of preparation scale and equipment. Densities are measured after drying to a humidity level of at most 2%. This is a level of humidity at which no free water is deemed present in the material. Drying may be performed in one of several manners known per se, such as in an oven, by circulation of heated air, by heat radiation and further by freeze drying. Use of an oven at a temperature below 100°C was found to be adequate.

The processable microporous insulation material has the advantage of being processable into a desired shape with a variety of techniques, including applying on a surface in the form of a paste, extrusion and molding into molded bodies. The technique of molding is deemed highly beneficial, as it allows to obtain bodies that can be easily assembled to an object, such as a cylinder or pipe. Still, the resulting molded bodies will have sufficient flexibility. Drying may be performed during the molding, but also and preferably after application of the molded bodies to the object. The drying after application has the advantage that the molded bodies remain very flexible. Evidently, the humidity level may be tuned during manufacture of the molded bodies so as to be practicable in use. When applied in the form of a paste, it is preferably applied on a foil. Such a foil may afterwards be removed or remain as a protective foil.

An advantage of the processable microporous insulation material is that it may well adhere to any underlying surface. If deemed necessary, dependent on the surface, a primer may be applied, and/or the surface or the molded body may be functionalized with a adhesion promotor. As a consequence, it is not deemed necessary to apply strips around the microporous insulation material, or to use alternative fasteners. Furthermore, as will be apparent, the processable microporous insulation material may be applied in a shape corresponding to the desired object.

These and other objects of the methods and insulation of the present invention will be further elucidated with the following examples. It is observed for sake of clarity that any embodiment and implementation specified hereinabove and/or in the dependent claims applies to any and all of the aspects of the invention, even if not specified so explicitly. When reference is made to composite microporous insulation, this is alternative wording to processable microporous insulation and indicates that the insulation material not just comprises microporous material, but also a complementary shell or carrier material being the gelled material.

### EXAMPLES

### Measurement methods

Thermal conductivity at 10°C is measured using a heatflow meter according to ASTM C518, wherein the lower plate is at 0 °C and the higher plate is at 20°C. Thermal conductivity at 400°C is obtained by extrapolation from the value at 10°C, using a model for the development of thermal conductivity for microporous materials, such as indicated on page 17 of the product brochure "High temperature microporous insulation" of Promat International NV, dated 052014. The relevant graph is that of the Microtherm 1000 Grade.

Shrinkage is defined by weight loss (Wt%), change in length of width (W+L%) and change in thickness (Thx%). The reported change is change after a heat treatment during 12 hours at 600°C. The total shrinkage may be calculated on the basis of a disc-volume on the basis of the changes in length and width (W+L%) and thickness (Thk%) as Δ(πr² × t ) = Δ(π/4d² × t ) = π/4 - [π/4*(1-(W+L))² × (1-Thk)]. Herein r refers to radius, t to thickness, d to the diameter. The W+L and Thx are specified in %.

Density is measured after initial drying of the samples.

### Example 1

Microporous powder mixtures were prepared as specified in Table 1. Use was made of a hydrophobic pyrogenic silica with a surface area of 200 m²/g as commercially available from Evonik under the trade name Aerosil^{™}. The mineral fiber is a silica based fiber comprising 81-94% SiO2 and 6-19% Al2O3 with the remainder being ZrO2 and/or TiO2 and maximum 3% of Na2O and maximum 1.5% of further components, as available from Belchem Fiber Materials, Germany. Its average diameter is 6 µm.

**Table 1 - composition of microporous powder mixtures. Values in weight per cent**

| | M1 |
|---|---|
| Pyrogenic silica | 57.3% |
| Rutile opacifier | 40.0% |
| Mineral fiber | 2.7% |

Gelation mixtures were prepared in accordance with table 2. The mixtures were in powder form. The polyethylene oxide was a water-soluble nonionic polymer with an average molecular mass of 4.0.10⁶, available from Dow Chemicals under the tradename Polyox^{™} WSR-301. The polyacrylic acid was obtained from Celanese under the tradename ElotexTM Flex 8320. It is a spray-dried redispersible polymer powder based on acrylic monomers. The methylcellulose is a medium molecular weight (approximate weight 88,000 g/mol) methylcellulose thickener with methoxy substitution between 27.5 and 31.5% by weight as commercially available under the trade name Methocel. The fumed silica is a hydrophilic fumed silica with a surface area of 200 m²/g available from Evonik under the trade name Aerosil^{™}, and known for use as a dispersant. The polyvinyl alcohol was a binder available from AVEBE under the trade name Solvitose 17S. The ethylene vinyl acetate was a white powder obtained by spray drying of an aqueous vinyl acetate-ethylene copolymer dispersion commercially obtainable from Dow Chemicals under the trade name DLP212.

**Table 2 - gelation powder mixtures. All values in weight% of the gelation powder mixture**

| | G1 | G2 | G3 |
|---|---|---|---|
| Polyethylene oxide | 30.7 | 30.7 | 30.7 |
| Polyacrylic acid | 4.0 | 4.0 | 0 |
| Methylcellulose | 14.7 | 14.7 | 14.7 |
| Fumed silica | 50.7 | 24.0 | 50.7 |
| Ethylene vinyl acetate | 0 | 0 | 4.0 |
| Polyvinyl alcohol | 0 | 26.7 | 0 |

Liquid mixtures were prepared in accordance with Table 3. The colloidal silica was a neutral, aqueous dispersion of colloidal silica with approximately 40% solids by weight. The silica dispersion is sterically stabilized and the amorphous silica particles carry a negative surface charge and have been surface modified with an epoxy silane. Water glass was an inorganic binder based on an aqueous solution of potassium silicate commercially available from Woellner under the tradename Betol^{™}. It has a pH of 12 and 40% by weight solids. The fatty acid agent was an anionic surfactant composed of C14/C16 alpha olefin sulphonate sodium salt commercially available under the tradename Hostapur^{™} OSB from Clariant Industrial & Home Care with 90% by weight solids. Water was tap water.

**Table 3 - liquid mixtures, all data as added amounts.**

| | L1 | L2 | L3 |
|---|---|---|---|
| Colloidal silica | 50 | 0 | 0 |
| Water glass | 0 | 50 | 50 |
| Fatty acid agent | 0 | 0 | 0.3 |
| Water | 330 | 330 | 330 |

Test compositions were prepared on the basis of the microporous mixtures, the gelation mixture and the liquid mixtures as specified hereinabove in Tables 1-3. Thereto the gelation mixture was mixed with the liquid mixture. Thereafter, mixing took place, which resulting in gelation of ingredients to form a gel, according to the invention. Microporous powder is thereafter added to the gel in the mixer. The entire mixture is then mixed and blended until a homogeneous mixture is obtained. Table 4 shows the compositions 1-5 based on dry weight. Examples 1 and 5 comprise neutral colloidal silica instead of water glass. Example 5 additionally does not contain a crosslinking agent for the hydrophilic polymer, such that no hydrogel is formed. Visual observations on the liquid mixture, the gelation phase and the paste are reported.

**Table 4, experiments. All data in weight% based on dry weight only.**

| Sample | 1* | 2 | 3 | 4 | 5* |
|---|---|---|---|---|---|
| microporous powder | 72.5% M1 | 77.5% M1 | 77.5% M1 | 77.5%M1 | 72.5% M1 |
| Gelation powder | 7.5% G1 | 7.5% G1 | 7.5% G1 | 7.5% G2 | 7.5% G3 |
| Liquid | 20.0% L1 | 15.0% L2 | 15.0% L3 | 15.0% L2 | 20% L1 |
| Liquid phase appearance | Milky | Clear, Odorous | Clear, Odorous | Clear, Odorous | Milky |
| Gelation phase quality | + | +++ | ++ | +++ | - |
| Paste quality | ++ | ++ | ++ | ++ | No paste obtained |

Characterization tests were performed on the experiments of the invention, forming an appropriate paste. Each time small tiles of 20 × 20 cm were made by casting in a mold, following by drying in an oven at temperature below 100°C for 2-3 hours. After this drying, measurement of density, thermal conductivity was performed. Shrinkage was measured by mass and dimensional determination before and after a 12-hour heat treatment at 600°C. Results are presented in Table 5.

**Table 5 - characterization data for the compositions 2-4**

| Sample | 2 | 3 | 4 |
|---|---|---|---|
| Density (g/l) | 400 | 415 | 418 |
| Thermal conductivity at 10°C (mW/m.K) | 32 | 29 | 35 |
| Weight loss (Wt%) | 4.4 | 6.6 | 6.0 |

It is apparent from Table 5, that the use of waterglass results in processable microporous insulation material having a density around 400 g/l, a thermal conductivity at 10°C (room temperature) of merely 30 mW/mK and an acceptable weight loss from 4 to 7%, depending on the exact formulation. These beneficial performance properties are complented with ease of manufacturing as is apparent from the observations in Table 4.

## Claims

1. Method of preparing a processable microporous insulation material, comprising the steps of:
- providing a hydrogel or a precursor thereof;
- generating an aqueous siliceous composition based on waterglass;
- mixing the aqueous siliceous composition with the hydrogel or the precursor thereof to obtain a gel;
- loading a microporous powder into the gel, said microporous powder comprising opacifier and particulate silica material from the group of pyrogenic silica and precipitated silica, said particulate silica material optionally further comprising alumina, said weight% based on total dry weight of the microporous powder, wherein said microporous powder and/or at least part of said particulate silica material is hydrophobic.

2. Method as claimed in claim 1, wherein the microporous powder comprises 0-10% by weight of inorganic fiber, 20-50% by weight of opacifier and 30-70% by weight of particulate silica material.

3. Method as claimed in claim 1 or 2, wherein the waterglass is a potassium silicate.

4. Method as claimed in any of the claims 1-3, wherein the hydrogel is generated by providing a precursor of the hydrogel, and the aqueous siliceous composition is mixed with said precursor.

5. Method as claimed in claim 4, wherein the precursor of the hydrogel is a dry mixture of a hydrophilic polymer, a crosslinking polymeric or oligomeric material, and wherein the hydrogel is generated in that the hydrophilic polymer is crosslinked with the crosslinking polymeric or oligomeric material.

6. Method as claimed in claim 5, wherein the hydrophilic polymer is a polyalkylene oxide and the crosslinker is a polyacid material.

7. Method as claimed in any of the preceding claims, wherein the dry weight amount of waterglass is 10-20 wt% based on total dry weight of ingredients to the processable microporous insulation material, preferably 12 to 17wt%.

8. Method as claimed in any of the preceding claims, wherein the microporous powder is loaded into the gelled material in an amount of 65-85wt%, preferably 70-80wt% based on total dry weight of ingredients to the processable microporous insulation material.

9. Method as claimed in any of the preceding claims, wherein said dry mixture further comprises a silica material as a dispersant, preferably a hydrophilic fumed silica.

10. Method as claimed in any of the claims, wherein the microporous powder comprises inorganic fiber with a diameter of at least 5 µm, preferably wherein the inorganic fiber is a silica-based fiber.

11. Method of as claimed in any of the preceding claims, comprising the further step of molding the processable microporous insulation material into molded bodies

12. Processable microporous insulation material comprising a microporous powder loaded into a gel, which is obtainable with the method of any of the preceding claims.

13. Method of applying microporous insulation to an object, wherein the processable microporous insulation material obtainable in accordance with any of the claims 1-11 is used as the microporous insulation.

14. Method as claimed in claim 13, wherein the processable microporous insulation material is dried after its application, preferably to a humidity level of at most 3%, preferably at most 2%.

15. Object provided with a composite microporous insulation, that comprises a microporous powder loaded into a gel,
wherein said microporous powder comprising at least a particulate silica material and an opacifier, said particulate silica material being chosen from the group of pyrogenic silica and precipitated silica, said particulate silica material optionally further comprising alumina, wherein said microporous powder and/or at least part of said particulate silica material is hydrophobic,
wherein said gel comprises a polymer-based hydrogel and a silica gel material obtained by dilution and pH lowering of waterglass, followed by drying of the gel after loading of the microporous powder.
